# EUROPÄISCHE PATENTSCHRIFT

(11) **EP 1 645 439 B1**
(45) Veröffentlichungstag und Bekanntmachung des Hinweises auf die Patenterteilung: **10.08.2011**
(21) Anmeldenummer: 05022028.4
(22) Anmeldetag: 10.10.2005
(51) Int. Cl.: B60B 31/00, B62D 65/16, B62D 65/12, B25J 9/16

(54) **Vorrichtung zur automatischen Montage von Rädern und Verfahren hierfür**
Apparatus for automatic mounting of wheels and corresponding method
Dispositif pour montage automatique de roues et méthode correspondante

(30) Priorität: 11.10.2004 DE 102004049470; 30.09.2005 DE 102005047158
(43) Veröffentlichungstag der Anmeldung: 12.04.2006
(73) Patentinhaber: IBG Technology Hansestadt Lübeck GmbH, 23569 Lübeck (DE); Bayerische Motoren Werke Aktiengesellschaft, 80809 München (DE)
(72) Erfinder: Regauer, Erich, 93138 Lappersdorf (DE); Goeke, Matthias, 58809 Neuenrade (DE)
(74) Vertreter: Gerbaulet, Hannes

(56) Entgegenhaltungen:
- EP-A- 0 650 042
- EP-A- 1 138 528
- WO-A-03/034165
- GB-A- 2 264 569
- JP-A- 3 256 624
- JP-A- 59 227 506
- US-A- 4 909 105
- US-A- 5 159 745

## Beschreibung

### Technisches Gebiet

Die vorliegende Erfindung betrifft eine Vorrichtung zur automatischen Radmontage gemäß dem Oberbegriff des Anspruchs 1 und ein Verfahren zur automatischen Radmontage gemäß dem Oberbegriff des Anspruchs 9 (vgl. Druckschrift US 4 909 105 aus dem Stand der Technik).

### Stand der Technik

Derzeit kommen aufgrund der hohen Verfügbarkeits- und Genauigkeitsanforderungen in der Fließmontage von Rädern an ein Fortbewegungsmittel, zum Beispiel an eine Fahrzeugkarosserie oder an einen Radträger, ausschließlich manuelle Montageverfahren zum Einsatz.

Bei automatischen Montageverfahren von Rädern an ein Fortbewegungsmittel, beispielsweise an ein Fahrzeug, werden die Räder von stationären Industrierobotern und/oder von mechanischen Systemen an das Fortbewegungsmittel montiert. Hierfür wird das Fortbewegungsmittel für den Montagevorgang auf mindestens eine Seitenbahn ausgespurt und erst nach Abschluss der Montage des entsprechenden Rads wieder in den Fließbetrieb eingespurt.

Insbesondere bei der Radmontage bzw. Felgenmontage ist es heutzutage üblich, die Räder mit ihren Felgen an einem Fahrzeug bzw. an den Bremsscheiben manuell zu montieren. Die Räder werden in einem Zuführband durch einen ersten Montagearbeiter mit einer Montagehilfe aufgenommen und mit einer Schraube vorbefestigt.

Ein zweiter Montagearbeiter führt die restlichen Schrauben zu und verschraubt das Rad vollständig mit einer weiteren Montagehilfe, die einen

Schrauber umfasst. Je Fahrzeugseite sind insgesamt zwei Montagearbeiter vorgesehen, so dass insgesamt vier Montagearbeiter benötigt werden.

Aus der Druckschrift DE 32 46 220 C2 ist eine Vorrichtung zur automatischen Montage einer Radfelge an einer Radnabe bekannt. Hierbei ist vorgesehen, dass das Lochbild der Radnabe durch ein Kamera-Sensorsystem erkannt und dadurch eine lagerichtige, automatische Positionierung der Felgen durch Steuerung einer Greif- und Montagevorrichtung ermöglicht wird. Das Greifen und Montieren des Rads erfolgt über die Greif- und Montagevorrichtung mit einem Mehrfachschrauber.

Diese bekannte Vorrichtung weist mehrere Greifarme auf, die die Räder an ihrem äußeren Umfang greifen. Das Rad wird also außen umfasst. Bei der praktischen Anwendung besteht das Problem, dass erhebliche Lageabweichungen aufgrund von Toleranzen der Räder auftreten.

In der Druckschrift DE 199 37 243 C1 wird beschrieben, wie bei Autorennen die Räder der Rennfahrzeuge in wenigen Sekunden in der Versorgungsbox ausgetauscht werden können. Weiterhin soll das Suchen des Tankstutzens durch den Tankroboter optimiert werden.

Ergänzend sei zum Stand der Technik noch auf die Druckschriften GB 2 264 569 A, WO 03/034165 A1 und US 5 159 745 aufmerksam gemacht.

### Darstellung der vorliegenden Erfindung: Aufgabe, Lösung, Vorteile

Ausgehend von den vorstehend dargelegten Nachteilen und Unzulänglichkeiten sowie unter Würdigung des umrissenen Stands der Technik liegt der vorliegenden Erfindung die Aufgabe zugrunde, eine Vorrichtung gemäß dem Oberbegriff des Anspruchs 1 sowie ein Verfahren gemäß dem Oberbegriff des Anspruchs 11 so weiterzubilden, dass eine automatische lageexakte Radmontage möglich ist.

Diese Aufgabe wird durch die kennzeichnenden Merkmale des Anspruchs 1 bzw. durch durch die kennzeichnenden Merkmale des Anspruchs *11* gelöst.

Die vorliegende Erfindung liefert, beispielsweise für Montagevorgänge in der Automobilindustrie, eine produktionstaugliche Lösung zur Durchführung von automatisierten Montagevorgängen von mindestens einem Rad an mindestens einem kontinuierlich bewegten Fortbewegungsmittel, insbesondere an mindestens einer Fahrzeugkarosserie und/oder an mindestens einem Radträger, zum Beispiel an mindestens einer Bremsscheibe eines Fahrzeugs.

Dabei basiert eine besonders vorteilhafte Ausgestaltung der vorliegenden Erfindung auf der Idee der Synchronisation zwischen dem Fortbewegungsmittel und dem zu montierenden Rad.

Diese innovative Idee erlaubt es, zuvor stationär programmierte Bewegungen von mechanischen Systemen, insbesondere zuvor stationär programmierte Roboterbewegungen, einfach und schnell in die bewegte Montage zu überführen.

Die vorliegende Erfindung kann somit zur Durchführung von automatisierten Montageprozessen an einem sich auf einem bewegten Förderband befindlichen Fortbewegungsmittel, insbesondere an einer Fahrzeugkarosserie und/oder an einem Radträger, zum Beispiel an einer Bremsscheibe eines Fahrzeugs, verwendet werden.

Dabei ist eine Ausführungsform der vorliegenden Erfindung weitgehend aus auf dem Markt erhältlichen, bereits erprobten Standardkomponenten aufgebaut.

Um das mindestens eine Rad an das mindestens eine Fortbewegungsmittel, insbesondere an die Karosserie und/oder an den Radträger, im Fließbetrieb montieren zu können, werden exakte Raumkoordinaten des Rads und/oder des Fortbewegungsmittels benötigt.

Diese Raumkoordinaten werden gemäß der vorliegenden Erfindung mittels mindestens eines *insbesondere* dreidimensionalen Kamerasystems, vorzugsweise mit mindestens einer speziellen Software, durch Bildaufnahmen im Fließbetrieb gewonnen.

*Danach* werden die Daten aufbereitet und zu mindestens einem zur Montage des Rads ausgebildeten mechanischen System oder Roboter, insbesondere zu mindestens einer Robotersteuerung, gesendet.

*Daraufhin* korrigiert der Roboter seine Positionen, beispielsweise die Anordnung des Roboters in mindestens einer Produktionsbahn, die Ausrichtung mindestens eines Roboterarms und/oder die Ausrichtung mindestens eines Montagekopfs.

Nach der Korrektur, insbesondere Bahnkorrektur, wird gemäß der vorliegenden Erfindung über ein Triggersignal die Geschwindigkeit des Fortbewegungsmittels, insbesondere des Fahrzeugs, durch mindestens einen hochgenauen Istwertgeber, der vorzugsweise an mindestens einer Synchronisiereinrichtung, zum Beispiel an mindestens einem Servoarm der Synchronisiereinrichtung, montiert ist, synchronisiert.

Die Synchronisiereinrichtung weist vorteilhafterweise mindestens eine zusätzliche, vorzugsweise virtuelle und/oder vorzugsweise servogetriebene, Achse auf.

Besonders vorteilhaft ist eine Ausführungsform, bei der die Synchronisiereinrichtung, insbesondere die Achse, sich vorzugsweise automatisch an die Fördertechnik und/oder Fördervorrichtung des Fortbewegungsmittels, insbesondere des Fahrzeugs, andocken kann und dann die Verbindung zum Antrieb, insbesondere zum Motor, der Synchronisiereinrichtung abkuppelt.

Vorteilhafterweise bringt also mindestens ein insbesondere servogetriebener Antrieb, beispielsweise mindestens ein Motor, die Synchronisiereinrichtung in Synchronisation mit der Bewegung der Fördertechnik und/oder Fördervorrichtung, damit sich die Synchronisiereinrichtung mit der Fördertechnik und/oder Fördervorrichtung verbinden, insbesondere an die Fördertechnik und/oder Fördervorrichtung andocken, kann.

Nachdem die mindestens eine Verbindung der Synchronisiereinrichtung mit der Fördertechnik und/oder Fördervorrichtung hergestellt ist, kann zweckmäßigerweise die Verbindung der Synchronisiereinrichtung zum insbesondere servogetriebenen Antrieb getrennt, beispielsweise abgekuppelt, werden.

Die Synchronisiereinrichtung und/oder der Roboter fahren vorteilhafterweise während der Montage mit dem Fortbewegungsmittel, insbesondere mit dem Fahrzeug, mit und nach Abschluss der Montage wieder zurück an ihren Ausgangsort.

Unabhängig hiervon oder in Verbindung hiermit ist es möglich, vorteilhafterweise auf der Synchronisiereinrichtung, insbesondere am Servoarm oder auf dem Servoarm, mindestens einen Sensor, insbesondere mindestens einen Laserabstandssensor, anzuordnen, vorzugsweise zu montieren.

Vorteilhafterweise ist der Sensor dazu ausgebildet, insbesondere kontinuierlich und/oder insbesondere laufend Korrekturwerte, die beispielsweise durch Gehänge- und/oder Stahlbauungenauigkeiten beispielsweise in z-Richtung erforderlich sind, bereitzustellen, insbesondere dem Roboter zu liefern.

Ferner kann, um den Arbeitsbereich des Roboters in Produktionsrichtung zu verlängern, der Roboter optionalerweise auf mindestens einer Beförderungseinrichtung, beispielsweise auf mindestens einer weiteren Fahrbahn und/oder auf mindestens einer weiteren Fahrschiene, beispielsweise auf mindestens einer zusätzlichen, etwa siebten, Achse angeordnet, vorzugsweise montiert, werden.

Gemäß einer vorteilhaften Ausführungsform der vorliegenden Erfindung kann der Roboter in sechs Bewegungsrichtungen und/oder in drei Freiheitsgraden mit jeweils positiver und negativer Orientierung bewegt werden. Die optionale zusätzliche Beförderungseinrichtung, insbesondere die zusätzliche siebte Fahrachse des Roboters, auf der zweckmäßigerweise der Roboter in seiner Gesamtheit bewegt, insbesondere der ganze Roboter verfahren, werden kann, unterstützt die Synchronisierung des Roboters zum vorzugsweise kontinuierlich bewegten Fortbewegungsmittel.

Bei dieser vorteilhaften Ausführungsform kann der Roboter schneller in die Bewegung des Fortbewegungsmittels, insbesondere in die Bewegung der Fördertechnik und/oder Fördervorrichtung, eingebunden werden.

Zweckmäßigerweise wird also diese Beförderungseinrichtung, insbesondere die siebte Achse, in die Synchronisierung des Roboters zum Fortbewegungsmittel, insbesondere zum Fahrzeug, mit integriert.

Die Fördertechnik und/oder Fördervorrichtung ist gemäß einer vorteilhaften Ausführungsform der vorliegenden Erfindung vom vorstehend genannten Montageprinzip unabhängig. Die Fördertechnik und/oder Fördervorrichtung kann beispielsweise mindestens eine Hängebahn, mindestens ein Stahlgehänge, mindestens ein Kettentransfer, mindestens ein Förderband, mindestens eine Schubplattentechnik oder dergleichen sein.

Eine vorteilhafte Ausgestaltung der vorliegenden Erfindung liefert des Weiteren eine Lösung und/oder ein Konzept
- zur Synchronisation der zur vorzugsweise kontinuierlichen Bewegung des Fortbewegungsmittels ausgebildeten mindestens einen Fördertechnik und/oder Fördervorrichtung, insbesondere von Handhabungs-und Fördereinrichtungen,
- für die Schaffung von Möglichkeiten zur Verbesserung des Laufverhaltens der Fördertechnik und/oder Fördervorrichtung, insbesondere neuer und/oder bereits vorhandener Förderanlagen,
- zur Erreichung höchster Verfügbarkeit des zu montierenden mindestens einen Rads,
- zur Reaktion auf Störungen, zum Beispiel mittels Not-Aus, und
- für die Anpassung der Greiftechnik an die zu lösende Aufgabe.

Gemäß einer vorteilhaften Ausführungsform der vorliegenden Erfindung gehen einzelne Entwicklungsschritte, wie zum Beispiel
- die schnelle Sensordatenrückführung,
- die notwendige Qualität des Laufverhaltens der Fördertechnik und/oder Fördervorrichtung und/oder von zur Beförderung des zu montierenden mindestens einen Rads ausgelegten Förderbändern und
- geeignete hochgenaue Synchronisationskonzepte aus Standardkomponenten
ebenso weit über den derzeitigen Stand der Technik hinaus wie die Abstimmung und die Implementierung dieser Einzelschritte in ein Gesamtsystem.

Vorteilhafterweise wird bei der Radmontage gemäß der vorliegenden Erfindung das Rad nicht außen umfasst, wie nach dem Stand der Technik bekannt ist, sondern die Felge mittig durchgriffen und mittels des Greifkopfes, der sich aufspreizt, erfasst.

Hierdurch wird eine ganz leichte Positionierbarkeit möglich, zumal gemäß einer bevorzugten Ausführungsform der sich der Bremsscheibe nähernde Greifkopf durch eine entsprechende Ausgestaltung des inneren Bereichs der Bremsscheibe automatisch aufgenommen und zentriert wird. Hierbei können die üblichen Gestaltungen von Bremsscheiben genutzt und zur Zentrierung des Montagekopfes herangezogen werden.

Durch die erfindungsgemäße Konstruktion werden Ungenauigkeiten durch die Reifen und durch die unterschiedlichen Felgentypen nicht mehr zu einem Problem bei der Positionierung.

Ein weiterer Vorteil der vorliegenden Erfindung besteht darin, dass die äußere Form des Rads keine Rolle mehr spielt. Dadurch können unterschiedliche Räder ohne Veränderung des Greifers bzw. des Greifwerkzeugs der Vorrichtung montiert werden.

Gemäß einer vorteilhaften Ausführungsform der erfindungsgemäßen Vorrichtung ist vorgesehen, dass der Montagekopf an einem Montagearm, insbesondere an einem Montageroboterarm eines Industrieroboters, drehbar und/oder schwenkbar befestigt ist, und zwar zum lagerichtigen Übereinanderlegen von Felgenbohrungen und Gewindebohrungen an der Bremsscheibe.

Durch den Industrieroboter und durch die drehbare Ausbildung des Montagekopfes kann eine lageexakte, mit den Gewindebohrungen fluchtende Positionierung in einfacher Weise erreicht werden.

Durch eine Befestigung von Schraubern am Montagekopf können sich diese mitdrehen, so dass eine automatische Ausrichtung der Schrauber gegeben ist. Somit ist es sehr günstig, wenn am Montagekopf Schrauber zur Festlegung von Felgenschrauben angeordnet sind.

Vorzugsweise ist der Montagekopf mit mindestens einer Abschiebehülse versehen, die derart ausgebildet ist, dass die Abschiebehülse beim Verschrauben mittels der Schrauber gleichzeitig ein Abschieben der Felge vom Greifer bewirkt. Hierdurch wird nicht die vollständige Kraft beim Lösen des Rads vom Montagekopf alleine durch die Schrauben aufgewendet. Diese günstige Kraftverteilung bewirkt eine sanfte Montage des Rads.

Wenn der Greifer eine Ausgestaltung aufweist derart, dass eine Zentrierung beim Greifen anhand eines inneren Bereichs der Bremsscheibe erfolgt, dann ist eine sehr exakte Vorpositionierung des Rads nicht unbedingt erforderlich, wenn dieses von einem Förderband zu einer Aufnahmestelle, zu einem Rahmen, zu einem Montagetisch oder zu dergleichen befördert wird. Der Industrieroboter kann das Rad von der Aufnahmestelle anhand der Zentrierung genau aufnehmen.

In einer weiteren vorteilhaften Ausführungsform der erfindungsgemäßen Vorrichtung ist diese als rechnergesteuerte Montageeinrichtung mit mindestens einer Kamera ausgebildet. Vorzugsweise ist die Montageeinrichtung mit zwei oder drei Kameras und mit mindestens einem Bildverarbeitungssystem, insbesondere mit mindestens einem dreidimensionalen Bildverarbeitungssystem, zur raumkoordinatenmäßigen Erfassung der Gewindebohrungen und somit zur vollautomatisierten, lageexakten Radmontage versehen.

Das Rad kann durch die Genauigkeit des Bildverarbeitungssystems parallel zur Bremsscheibe aufgesetzt werden. Eine Veränderung durch den Sturz, durch den Lenkeinschlag, durch die Drehorientierung der Bremsscheibe, durch die Stellung des Radträgers und/oder durch die Positionierung eines Gehänges wird durch das System entsprechend ausgeglichen.

Das Bildverarbeitungssystem ist somit derart ausgebildet, dass eine Raumbestimmung der Lage des Fahrzeugs und/oder der Bremsscheibe mit insbesondere drei, vier bis fünf Gewindebohrungen für die Radschrauben und/oder des zu montierenden Rads erfolgt.

Besonders zweckmäßig ist eine Montagestation mit mindestens einer erfindungsgemäßen Vorrichtung. Die Montagestation weist mindestens ein Zuführband für die Räder auf, das an einer im Wesentlichen waagrechten Radablage, insbesondere an einem Rahmenteil, endet. Der Montagerahmen beinhaltet eine Zentrierung, damit eine Vorpositionierung beim Greifen vom Montagekopf gegeben ist.

Der Rahmenteil ist in der Nähe der Vorrichtung angeordnet, und die Zentrierung ist vorzugsweise mit einem Anschlag in der Ausgestaltung eines Prismas versehen. Diese vorteilhafte Maßnahme erfordert wenig Aufwand in der Umsetzung und ist leicht in vorhandene Montageprozesse integrierbar. Sie erlaubt somit eine rationelle Montage an einem Fahrzeug.

Insbesondere sind zwei gegenüberliegende, jeweils seitlich vom Fahrzeug positionierte Roboter zur Montage jeweils eines Hinterrads und eines Vorderrads vorhanden, damit unter Kostenoptimierungsaspekten eine schnelle Montage erreicht wird.

Besonders effektiv ist eine Montage mit folgenden Montageschritten bzw. durch:
- einen Zuführungsvorgang der Räder, bei dem Räder vereinzelt werden, bevor das Fahrzeug mit einer Vorder- und/oder Hinterachse eine Montageposition erreicht hat,
- vorzugsweise auch einen Ermittlungsvorgang der Höhe der Greifposition für den Roboter,
- einen Greifvorgang, in dem ein Greifer in das Rad innen greift,
- einen Wartevorgang zur Ermittlung der Position der Gewindebohrungen und/oder der Bremsscheibenposition,
- einen Schwenkvorgang eines Roboterarms,
- einen Positionierungsvorgang des Rads und
- einen Befestigungsvorgang, in dem das Rad komplett automatisch verschraubt wird.

Das bevorzugte Montageverfahren erlaubt sehr kleine Taktzeiten von weniger als 55 Sekunden inklusive einem Fahrzeugwechsel.

Erfindungsgemäß ist auch vorgesehen, dass ein dreidimensionales Bildverarbeitungssystem eingesetzt wird, an dem mehrere Kameras angeschlossen sind, um einerseits eine Raumbestimmung der Lage des Fahrzeugs, des Radträgers mit seinem Lochbild und des zu montierenden Rads zu erfassen und um andererseits eine Korrektur einer Position des Industrieroboters zu erreichen, damit eine abweichende Position durch einen Sturz, durch einen Lenkeinschlag, durch eine Fahrzeugpositionierung, durch eine Stellung des Radträgers und/oder durch eine Drehorientierung des Radträgers ausgeglichen werden kann.

Durch diese erfindungsgemäße Ausbildung ist es möglich, die Felge genau parallel und in die richtige Drehposition zur Bremsscheibe auszurichten.

Weitere vorteilhafte Ausgestaltungen der vorliegenden Erfindung sind in den Unteransprüchen gekennzeichnet.

Die vorliegende Erfindung wird auf dem Gebiet der Montage in Bewegung eingesetzt oder verwendet.

Im Spezielleren betrifft die vorliegende Erfindung die Verwendung mindestens einer Vorrichtung gemäß der vorstehend dargelegten Art und/oder mindestens einer Montagestation gemäß der vorstehend dargelegten Art und/oder eines Verfahrens gemäß der vorstehend dargelegten Art zur automatisierten Montage von Rädern an kontinuierlich bewegten Fortbewegungsmitteln.

### Kurze Beschreibung der Zeichnungen

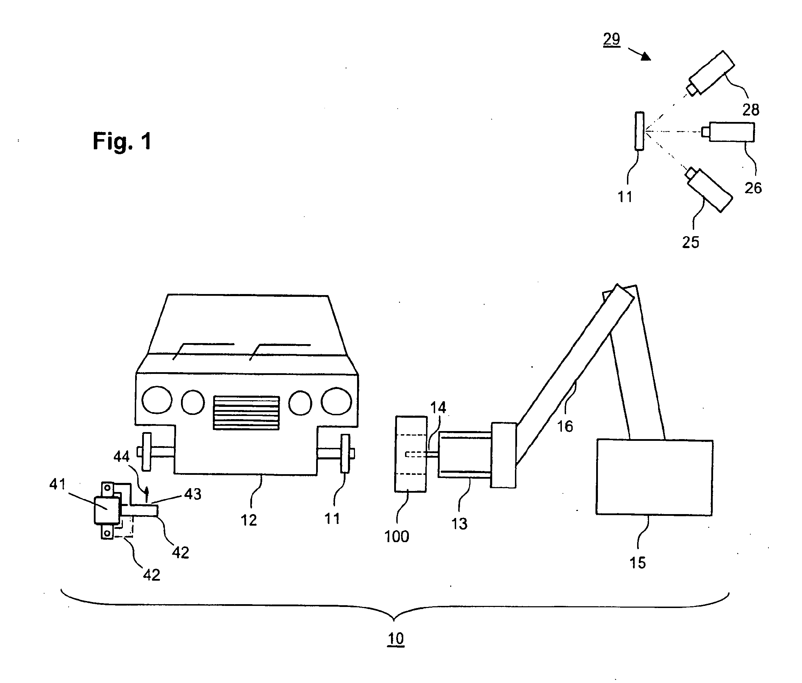

Weitere vorteilhafte Weiterbildungen, Ausgestaltungen, Merkmale und Vorteile der vorliegenden Erfindung werden nachstehend unter anderem anhand der durch die Fig. 1 bis 11 veranschaulichten exemplarischen Implementierung gemäß zweier Ausführungsbeispiele der vorliegenden Erfindung näher erläutert.

Es zeigt:
- Fig. 1: eine schematische Darstellung einer ersten Ausführungsform der erfindungsgemäßen Vorrichtung zur Radmontage an einem P[ersonen]k[raft]w[agen] im Fließbetrieb;
- Fig. 2: eine schematische Darstellung einer zweiten Ausführungsform der erfindungsgemäßen Vorrichtung zur Radmontage an einem P[ersonen]k[raft]w[agen] im Taktbetrieb;
- Fig. 3: eine schematische Darstellung einer ersten Ausführungsform eines Montagekopfes der Vorrichtung aus Fig. 1 und/oder aus Fig. 2;
- Fig. 4: eine schematische Darstellung eines ersten Ausführungsbeispiels des Montagekopfes aus Fig. 3 mit Spreizelementen zum Greifen einer Radfelge, wobei die Spreizelemente nicht auseinander gespreizt sind;
- Fig. 5: eine schematische Darstellung eines ersten Ausführungsbeispiels des Montagekopfes aus Fig. 3 mit den Spreizelementen, wobei die Spreizelemente auseinander gespreizt sind;
- Fig. 6: eine schematische Darstellung eines zweiten Ausführungsbeispiels des Montagekopfes aus Fig. 3 mit Spreizelementen zum Greifen einer Radfelge, wobei die Spreizelemente nicht auseinander gespreizt sind;
- Fig. 7: eine schematische Darstellung eines zweiten Ausführungsbeispiels des Montagekopfes aus Fig. 3 mit den Spreizelementen, wobei die Spreizelemente auseinander gespreizt sind;
- Fig. 8: eine schematische Darstellung einer Montagestation zur Montage im Fließbetrieb mit zwei erfindungsgemäßen Industrierobotern in einer Fertigungsstraße mit jeweils der erfindungsgemäßen Vorrichtung von oben gesehen;
- Fig. 9: eine schematische Darstellung einer Montagestation zur Montage im Taktbetrieb mit zwei erfindungsgemäßen Industrierobotern in einer Fertigungsstraße mit jeweils der erfindungsgemäßen Vor- richtung von oben gesehen;
- Fig. 10: eine schematische Darstellung der Montagestation aus Fig. 8 von der Seite gesehen; und
- Fig. 11: eine schematische Darstellung der Montagestation aus Fig. 9 von der Seite gesehen.

Gleiche oder ähnliche Ausgestaltungen, Elemente oder Merkmale sind in den Fig. 1 bis 11 mit identischen Bezugszeichen versehen.

### Bester Weg zur Ausführung der vorliegenden Erfindung

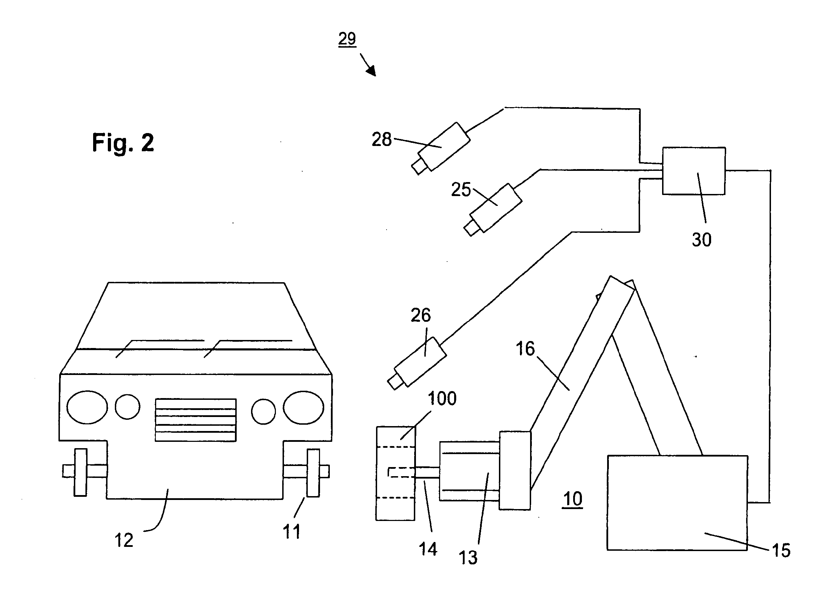

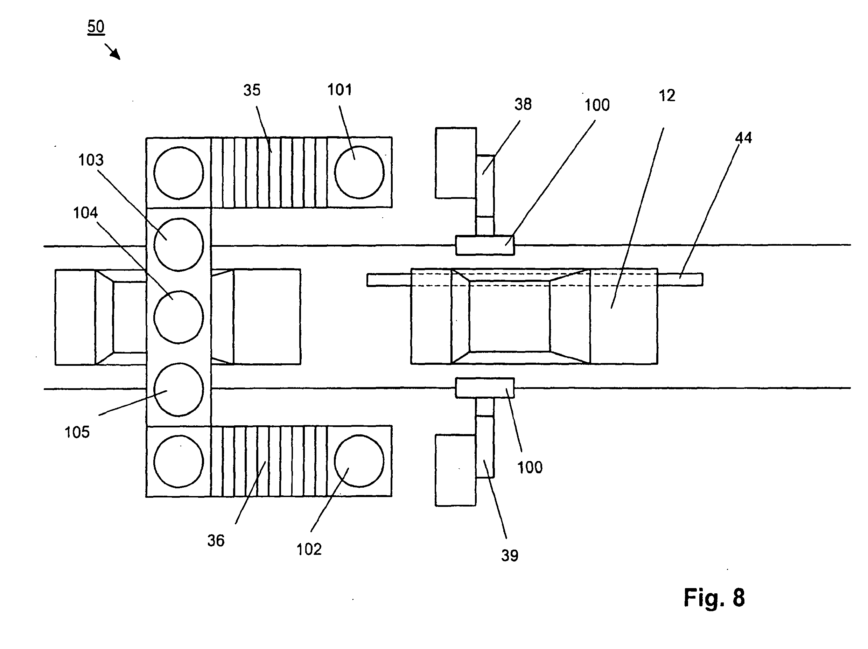

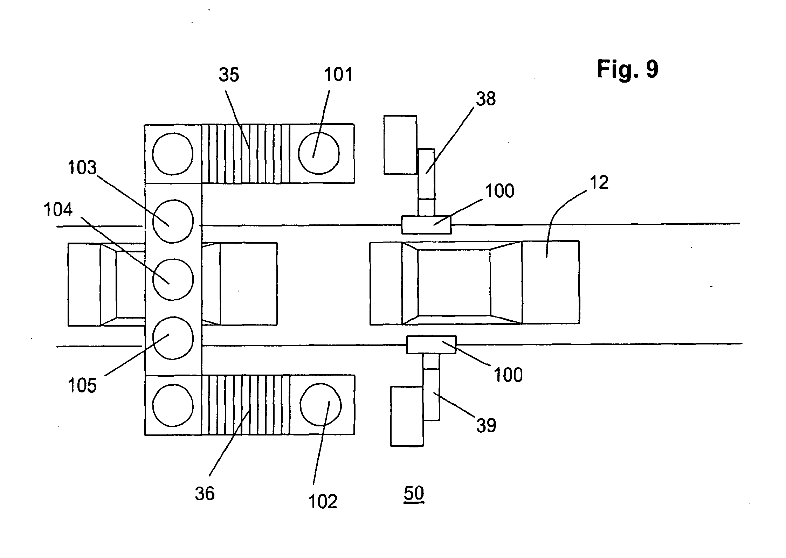

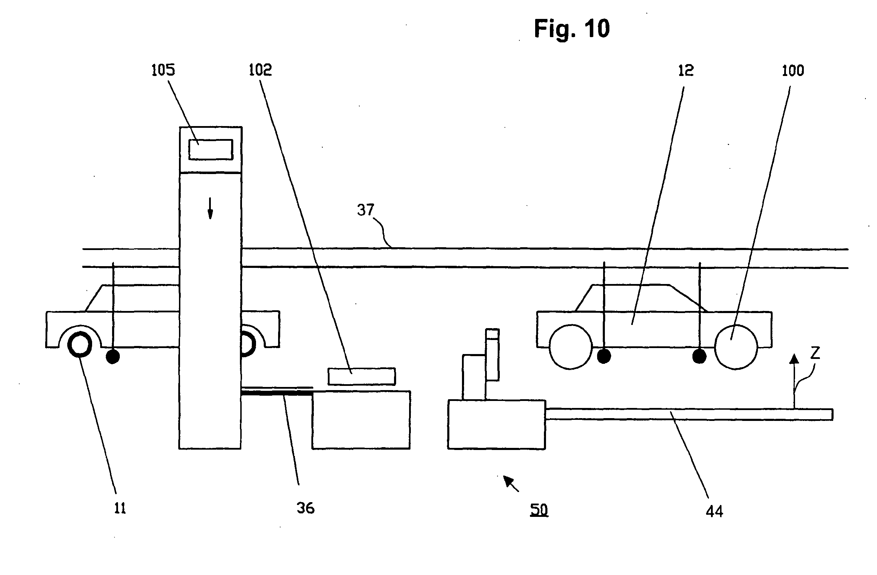

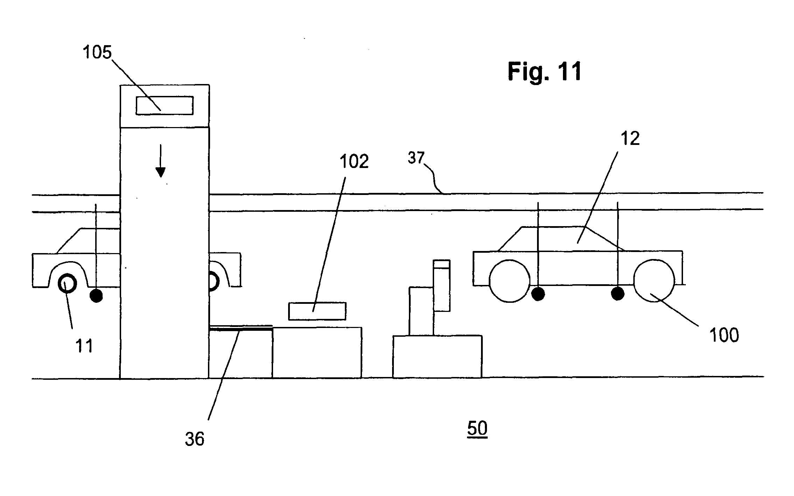

Zur Vermeidung überflüssiger Wiederholungen beziehen sich die nachfolgenden Erläuterungen hinsichtlich der Ausgestaltungen, Merkmale und Vorteile der vorliegenden Erfindung (soweit nicht anderweitig angegeben)
- sowohl auf die in Fig. 1 dargestellte Vorrichtung 10
- als auch auf die in Fig. 2 dargestellte Vorrichtung 10
- als auch auf die in den Fig. 8, 10 dargestellte Montagestation 13
- als auch auf die in den Fig. 9, 11 dargestellte Montagestation 13.

In Fig. 1 ist eine Vorrichtung 10 zur automatischen Montage von Rädern 101, 102, 103, 104, 105 an einem Fortbewegungsmittel 12, nämlich an einer Bremsscheibe 11 eines Fahrzeugs, dargestellt.

Diese Vorrichtung 10 ist dazu ausgelegt, im Fließbetrieb, etwa während des mittels einer Fördertechnik und/oder Fördervorrichtung 37 bewerkstelligten kontinuierlichen Bewegens des Fahrzeugs 12, die Räder 101, 102, 103, 104, 105 an die Bremsscheiben 11 des Fahrzeugs 12 zu montieren.

Um Fahrzeugkomponenten an eine Karosserie oder um Räder 101, 102, 103, 104, 105 an eine Bremsscheibe 11 im Fließbetrieb montieren zu können, ist es notwendig, vom System exakte Raumkoordinaten zu erhalten. Diese Koordinaten werden mittels eines 3D-Kamerasystems 29 mit spezieller Software durch Bildaufnahmen im Fließbetrieb gewonnen.

Die Daten werden danach aufbereitet und zur Steuerung des mechanischen Systems oder Robotersteuerung 15, 38, 39 gesendet. Das mechanische System oder der Roboter 15, 38, 39 korrigiert daraufhin seine Positionen.

Der Roboter 15, 38, 39 steht mit dem Kamerasystem 29 zur D[aten]F[ern]Ü[bertragung] in drahtloser oder drahtgebundener Verbindung und weist zur Montage der Räder 101, 102, 103, 104, 105 einen Roboterarm 16 mit einem Montagekopf 13 auf.

Wie in den Fig. 1 und 8 dargestellt, weist die Vorrichtung 10 mindestens einen Sensor 43, nämlich einen Höhentaster oder Laserabstandssensor, auf, der zum Ermitteln (Bezugszeichen 44, sogenannte Z-Messung) mindestens eines Abstands zwischen dem Sensor 43 und dem Montageort, nämlich der Bremsscheibe 11, des Fahrzeugs 12 ausgebildet ist.

Ferner ist der Sensor 43 zum Ermitteln mindestens eines Korrekturwertes, nämlich mindestens einer Höhendifferenz zwischen dem Montageort, nämlich der Bremsscheibe 11, und dem Roboter 15, 38, 39, insbesondere dem Roboterarm 16 und dem Montagekopf 13, ausgebildet.

Der Laserabstandssensor 43 ist also als Höhentaster zum Ausgleich von Tiefenbewegungen, wie etwa von Bewegungen in Richtung der Z-Achse T, die beispielsweise durch Stahlbau und/oder Gewicht des Fahrzeugs 12 verursacht werden können, ausgebildet.

Wie in Fig. 1 dargestellt, ist der Laserabstandssensor auf einer Synchronisiereinheit oder Synchronisiereinrichtung 41, genauer gesagt auf einem Servoarm 42 der Synchronisiereinrichtung 41, montiert.

Der Servoarm 42 kann beispielsweise mittels der Synchronisiereinrichtung 41 um seine eigene Achse gedreht und/oder spiegelbildlich gekippt werden, was in Fig. 1 mittels gestrichelter Linien dargestellt ist.

Zur kontinuierlichen Lieferung der Korrekturwerte in Z-Richtung mittels D[aten]F[ern]Ü[bertragung] steht der Laserabstandssensor 43 mit dem Roboter 15, 38, 39 in drahtloser oder drahtgebundener Verbindung.

Die Synchronisiereinrichtung 41 weist ferner mindestens einen Istwertgeber auf, der
- mit dem Roboter 15, 38, 39 zur D[aten]F[ern]Ü[bertragung] in drahtloser oder drahtgebundener Verbindung steht und
- zum Vorgeben der synchronen Bewegung des Roboters 15, 38, 39, insbesondere zum Vorgeben der Geschwindigkeit der synchronen Bewegung des Roboters 15, 38, 39, ausgelegt ist.

Nach der Bahnkorrektur des Roboters 15, 38, 39 wird die Geschwindigkeit des Fahrzeugs 12 über ein Triggersignal durch die hochgenauen Istwertgeber, die an der Synchronisiereinrichtung 41 montiert sind, synchronisiert.

Diese Synchronisiereinrichtung 41 dockt sich mittels mindestens eines aus Gründen der Übersichtlichkeit der Darstellung nicht abgebildeten Andockelements vorzugsweise automatisch an die Fördertechnik oder Fördervorrichtung 37 des Fahrzeugs 12 an und kuppelt dann die Verbindung zum Motor der Synchronisiereinrichtung 41 ab.

Die Fig. 1 und 2 veranschaulichen die Vorrichtung 10 zur automatischen industriellen Radmontage (Rad 100 mit Reifen) an einem Radträger, insbesondere an einer Bremsscheibe 11, eines Fahrzeugs 12, insbesondere eines P[ersonen]k[raft]w[agen]s. Die Montagevorrichtung 10 ist mit einem Montagekopf 13 versehen, der mit einem Greifer 14 ausgestattet ist und an einem Industrieroboter 15 bzw. an einem freien Ende des Roboterarms 16 befestigt ist.

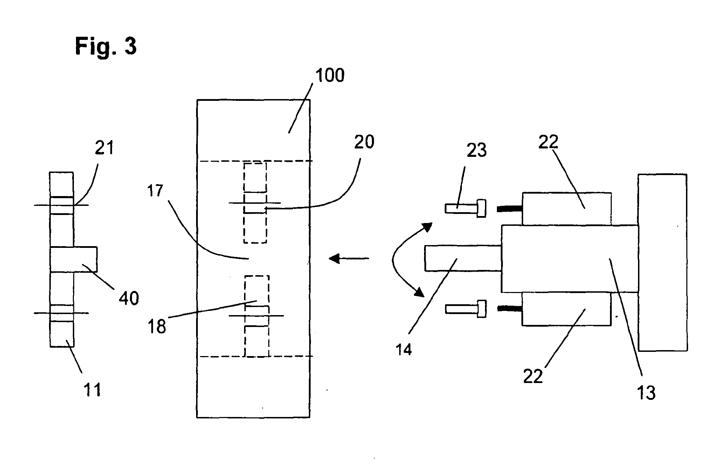

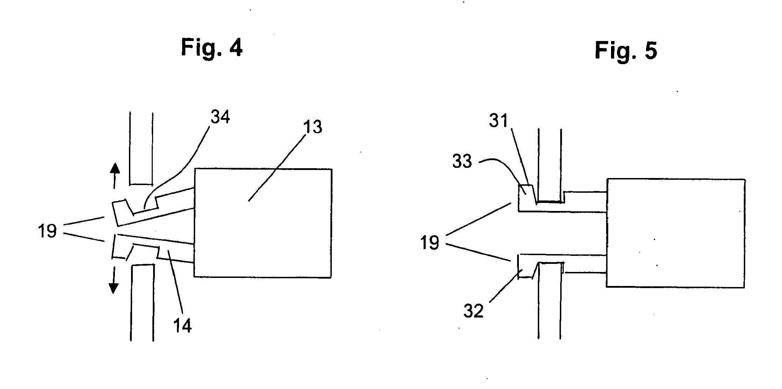

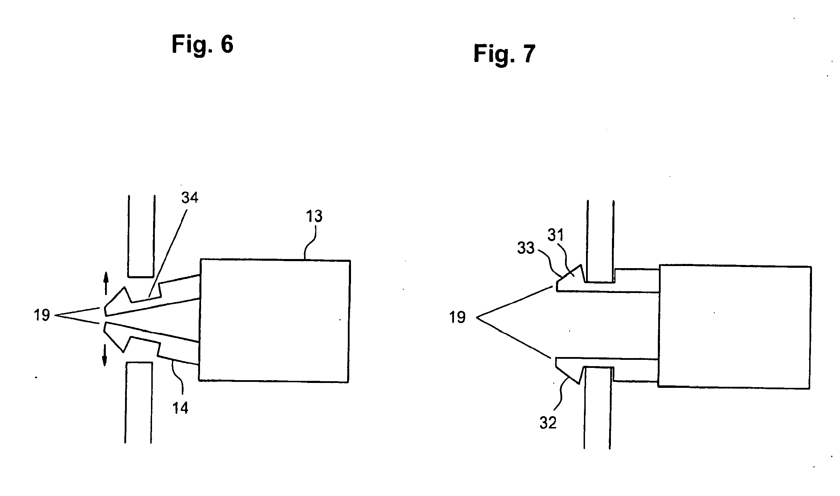

Der Greifer 14 ist als ein eine Mittelbohrung 17 einer Radfelge 18, die in Fig. 3 prinziphaft dargestellt ist, durchgreifendes Spreizelement 19 ausgebildet. In den Fig. 4 und 5 bzw. in den Fig. 6 und 7 ist dieses Element grob dargestellt.

Der Montagekopf 13, der am Montagearm bzw. am Roboterarm 16 festgelegt ist, ist drehbar und/oder schwenkbar befestigt. Dies ist erforderlich, damit Felgenbohrungen 20 und Aufnahmebohrungen bzw. Gewindebohrungen 21 an der Bremsscheibe 11 lagerichtig durch den Roboter 15 bzw. durch seinen Montagekopf 13 übereinander gelegt werden können.

Wie Fig. 3 zeigt, sind am Montagekopf 13 elektrisch angetriebene Schrauber 22 zur Festlegung von Felgenschrauben 23 angeordnet. Jeder Schrauber 22 ist beispielsweise derart ausgebildet, dass die Schrauben 23 über einen nicht dargestellten Vierfachverteiler aus einer Vereinzelungsvorrichtung zugeführt werden. Die Felgenschrauben werden vorzugsweise durch Schläuche geblasen und jedem Schrauber 22 zugeführt.

Der Einsatz von Standardschraubtechnik wird bevorzugt. Vorteilhaft ist es auch, alle Schrauben erst links dann rechts herum zu drehen, um einen minimalen Versatz in der Tiefe der Verschraubung zu erreichen.

Ebenfalls aus Gründen der Übersichtlichkeit der Darstellung nicht abgebildet ist, dass der Montagekopf 13 mit einer Abschiebehülse versehen ist. Diese Abschiebehülse ist derart ausgebildet, dass die Abschiebehülse beim Verschrauben mittels der Schrauber 22 gleichzeitig ein Abschieben der Felge 18 vom Greifer 14 bewirkt.

Durch eine Station zum Wechseln der Nuss für den Schrauber 22 der Schlossschraube und durch eine zusätzliche Vereinzelung lassen sich auch diese Schrauben automatisiert verarbeiten.

Zum Zentrieren des Rads 100 an dem Montagekopf 13 weist der Montagekopf 13, insbesondere der Greifer 14, ein Zentrierungsmittel auf, das mit der mittigen Felgenbohrung 17 zusammenwirkt. Nach dem Zentrieren des Rads 10 am Montagekopf 13 ist das Rad anschließend an der Bremsscheibe 11 zu zentrieren.

Dies erfolgt über eine mittige Erhebung 40 (vgl. Fig. 3). Daher weist der Greifer 14 eine Ausgestaltung auf derart, dass eine Zentrierung anhand eines inneren Bereichs der Bremsscheibe 11 erfolgt.

Wie Fig. 1 und 2 weiterhin zeigen, weist die erfindungsgemäße Vorrichtung 10 eine Ausbildung als rechnergesteuerte Montageeinrichtung oder Montagestation 50 mit mindestens einer Kamera, vorzugsweise mit zwei oder drei Kameras 25, 26, 28, und mit einem Bildverarbeitungssystem 30 auf.

Die erste Kamera 25 ist beispielsweise so positioniert und eingestellt, dass eine Totalaufnahme des Fahrzeugs 12 aufgenommen wird. Eine zweite Kamera 26 ist näher an der Bremsscheibe 11 angeordnet, um das Lochbild erfassen zu können.

Mindestens eine weitere Kamera 28 ist angeordnet, um eine dreidimensionale Erfassung zu ermöglichen, insbesondere wie bei der Aufnahme von 3D-Filmen. Die dritte Kamera 28 ist beispielsweise etwa parallel zur ersten Kamera 25 und etwa im gleichen Abstand zum Bildobjekt angeordnet, so dass die Bilder leicht versetzt sind. Hierdurch können Bildobjekte in richtiger Raumkoordinatenzuordnung (3D-Effekt) erfasst werden.

Eine andere 3D-Lösung, zum Beispiel mit zwei senkrecht zueinander stehenden Kameras, die senkrechte Ebenen erfassen, ist auch möglich.

Das insbesondere dreidimensionale Bildverarbeitungssystem 30 dient daher zur raumkoordinatenmäßigen Erfassung der Gewindebohrungen 20 und somit zur vollautomatisierten, lageexakten Radmontage. Das Bildverarbeitungssystem 30 ist nach diesem Beispiel weiterhin derart ausgebildet, dass eine Raumbestimmung der Lage des Fahrzeugs 12, der Bremsscheibe 11 mit insbesondere drei, vier bis fünf Gewindebohrungen 20 für die Radschrauben 23 und des zu montierenden Rads 100 erfolgt.

Wenn Unterschiede zwischen den zu erfassenden Fahrzeugen bestehen und auch Unterschiede zwischen Vorder- und Hinterachse bestehen, können diese vor jeder Montage vermessen werden.

Wie die Fig. 4 und 5 bzw. die Fig. 6 und 7 veranschaulichen, greift der Montagekopf 13 mit seinem Greifer 14 bzw. mit seinem Spreizelement 19 innen. Das Spreizelement umfasst mehrere Spreizteile 31, 32 oder mehrere Spreizzonen, die beispielsweise federelastisch bewegt werden können. Wie abgebildet, können die Spreizelemente die Felge zum Beispiel mit einem Vorsprung 33 und/oder mit einer Nut 34 (Fig. 5, 7) hintergreifen.

Eine erste bevorzugte Variante einer Montagestation 50 zur Montage im Fließbetrieb mit der erfindungsgemäßen Vorrichtung 10 ist in den Fig. 8 und 10 dargestellt.

Eine zweite bevorzugte Variante einer Montagestation 50 zur Montage im Taktbetrieb mit der erfindungsgemäßen Vorrichtung 10 ist in den Fig. 9 und 11 dargestellt.

Wie in den Fig. 8 bis 11 dargestellt, kann die Montagestation 50 in einer Fertigungsstraße insbesondere zur Fertigung von P[ersonen]k[raft]w[agen] eingesetzt werden. Die Montagestation 50 weist zwei Zuführbänder 35, 36 für die zu montierenden Räder 101, 102 auf. Weitere Räder 103, 104, 105 befinden sich in einer Vereinzelungsanlage zur späteren Montage.

Die Zuführbänder enden an einer waagrechten Radablage, vorzugsweise an einem Rahmenteil, wobei das Rahmenteil mit einer aus Gründen der Übersichtlichkeit der Darstellung nicht abgebildeten Zentrierung versehen und in der Nähe der Montagevorrichtung 10 angeordnet ist. Die Zentrierung ist vorzugsweise mit einem Anschlag in der Ausgestaltung eines Prismas versehen.

Diese Zentrierung fährt anschließend zurück und legt das Rad frei. Ein Aushub greift innen an der Felge 18 und hebt das Rad 100 an. Das Rad wird vom Aushub gedreht, wobei ein Messsystem die Drehung beobachtet und diese Drehung stoppt. Das Rad 100 wird dann vom Anhub dort orientiert abgelegt, wo sas Rad 100 vorher gelegen hat.

Die Montagestation 50 weist vorzugsweise zwei gegenüberliegende, jeweils seitlich vom Fahrzeug 12 positionierte Roboter 39 zur Montage jeweils eines Hinterrads und eines Vorderrads des P[ersonen]k[raft]w[agen]s auf.

Wenn das Fahrzeug 12, das vorzugsweise an einem Montagerahmen zur Radmontagevorrichtung 10 herangeführt wird, in seiner Raumposition festgelegt ist, wenn die Raumposition der Radschraubenbohrungen 20 relativ auf der Bremsscheibe 11 oder relativ zum Fahrzeug 12 festgelegt sind und wenn die Raumposition des angelieferten Rads 100 bzw. insbesondere der Felge 18 und der in der Felge 18 enthaltenen Bohrungen 20 festgelegt sind, dann beginnt der eigentliche Montagevorgang, der darin besteht, dass das Rad 100 vom Montagekopf 13 ergriffen und der Bremsscheibe 11 zugeführt wird.

Nach dem Heranführen der Felge 18 erfolgt das Aufstecken an die Bremsscheibe 11 auf den vorhandenen, aus Gründen der Übersichtlichkeit der Darstellung nicht abgebildeten Wulst zur Zentrierung der Felge, und zwar so, dass die Bohrungen 20 der Felge 22 und die Bohrungen 21 der Bremsscheibe übereinander liegen, so dass der Schraubenvorgang beginnen kann.

Beim Festschrauben wird das Rad 100 durch die Schrauben 23 zur Bremsscheibe 11 gezogen. Dadurch wird die Kraft minimiert, die der Roboter 15 (vgl. Fig. 1, 2), 38 bzw. 39 auf die Radaufhängung und damit auf das Fahrzeug 12 ausübt.

Der Takt wird hierbei in zwei Haltepositionen unterteilt und erlaubt dem Roboter 38 bzw. 39 den Zugriff auf das Fahrzeug in der Höhe der beiden Radaufhängungen. Die Arbeit am Fahrzeug 12 wird im Stillstand vorgenommen, so dass Einflüsse durch die Bewegung eines Gehänges weitgehend ausgeschlossen sind.

### Eine Radmontage kann weiterhin folgendermaßen aussehen:

Vorteilhaft ist die Erstellung einer Liste der Produktionsdaten einer Leitsteuerung zu erzeugen, um die Räder schon beim Einlauf des Fahrzeugs 12 aufnehmen zu können.

Zuerst erfolgt ein Zuführungsvorgang der Räder 103, 104, 105. Die Vorderräder werden vereinzelt, bevor das Fahrzeug 12 mit einer Vorderachse eine Montageposition erreicht hat.

Der Roboter 38 bzw. 39 führt gegebenenfalls einen Wechsel einer Schraubennuss durch.

Die Räder 103, 104, 105 werden zugeführt.

Die Schrauben 23 werden zugeführt.

Die Höhe der Greifposition für die Räder 101, 102 wird ermittelt.

Der Roboter 38 bzw. 39 fährt mit dem Greifer 14 in das Rad 100 und greift es innen.

Die Schrauber 22 drehen langsam, und die Schrauber-Nuss springt auf die Schraube 23.

Der Roboter 38 bzw. 39 fährt mit dem Rad 100 in eine Warteposition.

Das Fahrzeug 12 wird angehalten, und das Bildverarbeitungssystem 30 ermittelt die Position der Bremsscheibe 11.

Der Roboter 38 bzw. 39 übernimmt die Positionskorrekturen, führt das Rad 100 über einen Flansch und setzt die Schrauben 23 an.

Das Rad 100 wird komplett verschraubt.

Der Roboter fährt zurück zur Radzuführung.

Das Fahrzeug wird weiter gefördert und hält mit der Hinterachse in der Montagestation 50 an.

Der Ablauf bei der Montage des Hinterrads ist mit der Montage des Vorderrads vergleichbar.

Das Konzept ist hochgradig flexibel und auch auf neue Fahrzeugmodelle E87/E46 und Räder bzw. Reifen anwendbar.

Die vorliegende Erfindung ist nicht nur auf die beschriebenen Beispiele beschränkt, sondern umfasst auch gleichwirkende Ausführungsformen. Auch kann ein beliebiges Einzelmerkmal der Beschreibung mit einem anderen beschriebenen Merkmal kombiniert werden.

### Liste der Bezugszeichen

- 10: Vorrichtung
- 11: Bremsscheibe
- 12: Fortbewegungsmittel, insbesondere Fahrzeug, zum Beispiel Fahrzeugkarosserie
- 13: Montagekopf
- 14: Greifer
- 15: mechanisches System oder Roboter, insbesondere Industrieroboter
- 16: Arm des mechanischen Systems 15 oder Roboterarm, insbesondere Industrieroboterarm oder Montageroboterarm
- 17: Mittelbohrung
- 18: Radfelge
- 19: Spreizelement
- 20: Felgenbohrung
- 21: Bohrung
- 22: Schrauber
- 23: Schraube
- 24: Felgenschraube
- 25: erste Kamera
- 26: zweite Kamera
- 28: dritte Kamera
- 29: Kamerasystem
- 30: Bildverarbeitungssystem
- 31: erstes Spreizteil
- 32: zweites Spreizteil
- 33: Vorsprung
- 34: Nut
- 35: erstes Förderband bzw. erstes Zuführband
- 36: zweites Förderband bzw. zweites Zuführband
- 37: Fördervorrichtung und/oder Fördertechnik zur Beförderung des Fortbewegungsmittels 12
- 38: erstes mechanisches System oder erster Roboter, insbesondere erster Industrieroboter
- 39: zweites mechanisches System oder zweiter Roboter, insbesondere zweiter Industrieroboter
- 40: Erhebung
- 41: Synchronisiereinrichtung
- 42: Arm der Synchronisiereinrichtung 41, insbesondere Servoarm
- 43: Sensor, insbesondere Höhentaster und/oder Laserabstandssensor
- 44: Z-Messung, insbesondere Messung des Abstands zwischen dem Sensor 43 und mindestens einem Punkt, vorzugsweise dem mindestens einen Montageort, des Fortbewegungsmittels 12
- 50: Montagestation
- 100 - 105: Räder
- Z: Z-Achse, insbesondere Tiefenachse

## Patentansprüche

1. Vorrichtung (10) zur automatischen Radmontage an einem Radträger mit einem Montagekopf (13), der mit einem als eine Mittelbohrung (17) einer Radfelge (18) durchgreifende Spreizelement (19) ausgebildeten Greifer (14) versehen ist,
**gekennzeichnet durch** eine Ausbildung als rechnergesteuerte Montageeinrichtung (50) mit mindestens einem zur Bildaufnahme im Fließbetrieb und/oder im Taktbetrieb ausgebildeten Kamerasystem (29) und mit mindestens einem Bildverarbeitungssystem (30) zur raumkoordinatenmäßige Erfassung der Gewindebohrungen (21) und somit zur vollautomatisierten, lageexakten Radmontage, wobei das Bildverarbeitungssystem (30) derart ausgebildet ist, dass eine Raumbestimmung der Lage des Fahrzeugs (12) und/oder der Bremsscheibe (11) mit Gewindebohrungen (21) für die Radschrauben und/oder des zu montierenden Rads (100) erfolgt.

2. Vorrichtung gemäß Anspruch 1, **dadurch gekennzeichnet, dass** der Montagekopf (13) an einem Montagearm, insbesondere an einem Montageroboterarm (16), drehbar und/oder schwenkbar befestigt ist, und zwar zum lagerichtigen Übereinanderlegen von Felgenbohrungen (20) und Gewindebohrungen (21) an der Bremsscheibe (11).

3. Vorrichtung gemäß Anspruch 2, **dadurch gekennzeichnet, dass** am Montagekopf (13) Schrauber (22) zur Festlegung von Felgenschrauben (23) angeordnet sind, insbesondere dass der Schrauber (22) derart ausgebildet ist, dass Schrauben (23) über einen Mehrfachverteiler, vorzugsweise über einen Vierfach- oder Fünffachverteiler, aus einer Vereinzelungsvorrichtung zugeführt werden sowie die Schrauben (23) durch Schläuche geblasen werden.

4. Vorrichtung gemäß Anspruch 3, **dadurch gekennzeichnet, dass** der Montagekopf (13) mit einer Abschiebehülse versehen ist, die derart ausgebildet ist, dass die Abschiebehülse beim Verschrauben mittels der Schrauber (22) gleichzeitig ein Abschieben der Felge (18) vom Greifer (14) bewirkt.

5. Vorrichtung gemäß mindestens einem der Ansprüche 1 bis 4, **dadurch gekennzeichnet, dass** der Greifer (14) eine Ausgestaltung aufweist derart, dass eine Zentrierung anhand eines inneren Bereichs der Bremsscheibe (11) erfolgt.

6. Vorrichtung gemäß mindestens einem der Ansprüche 1 bis 5. **dadurch gekennzeichnet, dass** *das, vorzugsweise dreidimensionale, Kamerasystem (29) mindestens eine Kamera, insbesondere zwei oder drei Kameras (25, 26, 28), aufweist.*

7. Vorrichtung gemäß mindestens einem der Ansprüche 1 bis 6, **dadurch gekennzeichnet, dass** *das Bildverarbeitungssystem (30) dreidimensional ist.*

8. Vorrichtung gemäß mindestens einem der Ansprüche 1 bis 7, **dadurch gekennzeichnet, dass** *drei, vier bis fünf Gewindebohrungen (21) vorgesehen sind.*

9. Montagestation (50) mit mindestens einer Vorrichtung (10) gemäß mindestens einem der Ansprüche 1 bis 8, **gekennzeichnet durch** mindestens ein Zuführband (35, 36) für die Räder, das an einer im Wesentlichen waagrechten Radablage endet, wobei diese Radablage mit einer Zentrierung versehen und in der Nähe der Vorrichtung (10) angeordnet ist, und die Zentrierung vorzugsweise mit einem Anschlag in der Ausgestaltung eines Prismas versehen ist, wobei die Station (50) vorzugsweise zwei gegenüberliegende, jeweils seitlich vom Fahrzeug positionierte mechanische Systeme oder Roboter (38, 39) zur Montage jeweils eines Hinterrads und eines Vorderrads aufweist.

10. Montagestation gemäß Anspruch 9, **gekennzeichnet durch** eine Anordnung in einer Fertigungsstraße von Kraftfahrzeugen (12), insbesondere von P[ersonen]k[raft]w[agen].

11. Verfahren zur automatischen Radmontage an eine Bremsscheibe (11) eines Fahrzeugs (12) mittels einen Montagekopfes (13), der mit einem als eine Mittelbohrung einer Radfelge durchgreifendes Spreizelement ausgebildeten Greifer (14) versehen ist, **gekennzeichnet durch** eine Vorrichtung (10) gemäß mindestens einem der Ansprüche 1 bis 8 oder **durch** eine Montagestation (50) gemäß Anspruch 9 oder 10.

12. Verfahren gemäß Anspruch 11, **gekennzeichnet durch**
- einen Zuführungsvorgang der Räder (103, 104, 105), bei dem Räder vereinzelt werden, bevor das Fahrzeug (12) mit einer Vorderachse und/oder mit einer Hinterachse eine Montageposition erreicht hat,
- vorzugsweise auch einen Ermittlungsvorgang der Höhe der Greifposition für das mechanische System oder für den Roboter (15, 38, 39),
- einen Greifvorgang, in dem ein Greifer (14) in das Rad (100) innen greift,
- einen Wartevorgang zur Ermittlung der Position der Gewindebohrungen (21) und/oder der Bremsscheibenposition,
- einen Schwenkvorgang eines Roboterarms (16),
- einen Positionierungsvorgang des Rads (100) und/oder
- einen Festlegungsvorgang, in dem das Rad (100) komplett automatisch verschraubt wird.

13. Verfahren gemäß Anspruch 11 oder 12, **dadurch gekennzeichnet, dass** der Montagekopf (13) an einem mechanischen System oder Roboter (38, 39) befestigt und mit einem Femseh- oder Kamera-Sensorsystem zur Erfassung eines Felgenlochbilds gekoppelt ist, damit Radfelge (18) und Radträger lagerichtig überlagert werden, insbesondere mit einer Vorrichtung (10) gemäß mindestens einem der Ansprüche 1 bis 8 oder insbesondere mit einer Montagestation (50) gemäß Anspruch 9 oder 10.

14. Verfahren gemäß Anspruch 13, **dadurch gekennzeichnet, dass** ein dreidimensionales Bildverarbeitungssystem (30), an dem mehrere Kameras (25, 26, 28) angeschlossen sind, eingesetzt wird, um einerseits eine Raumbestimmung der Lage des Fahrzeugs (12), des Radträgers mit seinem Lochbild und des zu montierenden Rads zu erfassen und andererseits eine Korrektur einer Position des mechanischen Systems oder Roboters, insbesondere Industrieroboters (15, 38, 39), zu erreichen, damit eine abweichende Position durch einen Sturz, durch einen Lenkeinschlag, durch eine Fahrzeugpositionierung, durch eine Stellung des Radträgers und/oder durch eine Drehorientierung des Radträgers ausgeglichen werden kann.

15. Verwendung mindestens einer Vorrichtung (10) gemäß mindestens einem der Ansprüche 1 bis 8 und/oder mindestens einer Montagestation (50) gemäß Anspruch 9 oder 10 oder eines Verfahrens gemäß mindestens einem der Ansprüche 11 bis 14 zur automatisierten Montage von mindestens einem Rad an mindestens einem insbesondere kontinuierlich bewegten Fortbewegungsmittel (12)
- im Fließbetrieb, zum Beispiel während des Bewegens des Fortbewegungsmittels (12) mittels mindestens einer Fördertechnik und/oder Fördervorrichtung (37), oder
- im Taktbetrieb, zum Beispiel während des beispielsweise vorübergehenden Ruhens oder Stillstehens mindestens einer zum Bewegen des Fortbewegungsmittels (12) ausgelegten Fördertechnik und/oder Fördervorrichtung (37).

## Claims

1. A device (10) for automatic wheel mounting on a wheel carrier with a mounting head (13), which is provided with a gripper (14) constructed as a spreading element (19) penetrating a central bore (17) of a wheel rim (18),
**characterized by**
a construction as a computer-controlled mounting arrangement (50) with at least one camera system (29) constructed for image recording in continuous operation and/or in cyclic operation, and with at least one image processing system (30) for the detection according to space coordinates of the threaded bores (21) and hence for fully-automated, positionally exact wheel mounting, wherein the image processing system (30) is constructed such that a spatial determination takes place of the position of the vehicle (12) and/or of the brake disc (11) with threaded bores (21) for the wheel bolts and/or of the wheel (100) which is to be mounted.

2. The device according to Claim 1, **characterized in that** the mounting head (13) is rotatably and/or pivotably fastened on a mounting arm, in particular on a mounting robot arm (16), and namely for placing rim bores (20) and threaded bores (21) in the correct position one over another on the brake disc (11).

3. The device according to Claim 2, **characterized in that** on the mounting head (13) screwdrivers (22) are arranged for securing rim screws (23), in particular that the screwdriver (22) is constructed such that screws (23) are supplied via a multiple distributor, preferably via a four-fold or five-fold distributer, from a separating device, and the screws (23) are blown through tubes.

4. The device according to Claim 3, **characterized in that** the mounting head (13) is provided with a displacement sleeve, which is constructed such that on screwing by means of the screwdrivers (22), the displacement sleeve simultaneously brings about a displacement of the rim (18) from the gripper (14).

5. The device according to at least one of Claims 1 to 4, **characterized in that** the gripper (14) has a configuration such that a centring takes place by means of an inner region of the brake disc (11).

6. The device according to at least one of Claims 1 to 5, **characterized in that** the preferably three-dimensional camera system (29) has at least one camera, in particular two or three cameras (25, 26, 28).

7. The device according to at least one of Claims 1 to 6, **characterized in that** the image processing system (30) is three-dimensional.

8. The device according to at least one of Claims 1 to 7, **characterized in that** three, four to five threaded bores (21) are provided.

9. A mounting station (50) with at least one device (10) according to at least one of Claims 1 to 8, **characterized by** at least one feed conveyor (35, 36) for the wheels, which terminates at a substantially horizontal wheel deposit station, wherein this wheel deposit station is provided with a centring arrangement and is arranged in the vicinity of the device (10), and the centring arrangement is preferably provided with a stop in the configuration of a prism, wherein the station (50) preferably has two opposite mechanical systems or robots (38, 39) positioned respectively laterally from the vehicle, for the mounting respectively of a rear wheel and of a front wheel.

10. The mounting station according to Claim 9, **characterized by** an arrangement in an assembly line of motor vehicles (12), in particular of passenger cars.

11. A method for automatic wheel mounting to a brake disc (11) of a vehicle (12) by means of a mounting head (13), which is provided with a gripper (14) constructed as a spreading element penetrating a central bore of a wheel rim, **characterized by** a device (10) according to at least one of Claims 1 to 8 or by a mounting station (50) according to Claim 9 or 10.

12. The method according to Claim 11, **characterized by**
- a supply process of the wheels (103, 104, 105), in which wheels are separated before the vehicle (12) has reached a mounting position with a front axle and/or with a rear axle,
- preferably also a determining process of the height of the gripping position for the mechanical system or for the robot (15, 38, 39),
- a gripping process, in which a gripper (14) grips internally into the wheel (100),
- a wait process to determine the position of the threaded bores (21) and/or the brake disc position,
- a pivot process of a robot arm (16),
- a positioning process of the wheel (100) and/or
- a securing process, in which the wheel (100) is screwed in a fully automatic manner.

13. The method according to Claim 11 or 12, **characterized in that** the mounting head (13) is fastened to a mechanical system or robot (38, 39) and is coupled with a television- or camera sensor system to pick up a rim hole image, so that the wheel rim (18) and wheel carrier are superimposed in the correct position, in particular with a device (10) according to at least one of Claims 1 to 8 or in particular with a mounting station (50) according to Claim 9 or 10.

14. The method according to Claim 13, **characterized in that** a three-dimensional image processing system (30), to which several cameras (25, 26, 28) are connected, is used, in order on the one hand to capture a spatial determination of the position of the vehicle (12) of the wheel carrier with its hole image and of the wheel to be mounted, and on the other hand to achieve a correction of a position of the mechanical system or robot, in particular industrial robot (15, 38, 39), so that a deviating position by a fall, by a steering angle, by a vehicle positioning, by a position of the wheel carrier and/or by a rotation orientation of the wheel carrier can be compensated.

15. Use of at least one device (10) according to at least one of Claims 1 to 8 and/or of at least one mounting station (50) according to Claim 9 or 10 or of a method according to at least one of Claims 11 to 14 for the automated mounting of at least one wheel on at least one, in particular continuously moving, means of transportation (12)
- in continuous operation, for example during the moving of the means of transportation (12) by means of at least one conveying equipment and/or conveying device (37), or
- in cyclic operation, for example during the, for example, temporary rest or standstill at least of one conveying equipment and/or conveying device (37) designed for moving the means of transportation (12).

## Revendications

1. Dispositif (10) pour le montage de roue automatique sur un support de roue avec une tête de montage (13), laquelle est dotée d'une pince (14) conçue comme élément écarteur (19) traversant un alésage central (17) d'une jante de roue (18),
**caractérisé par**
une réalisation comme système de montage (50) commandé par ordinateur doté d'au moins un système de caméra (29) conçu pour la prise de vue en mode continu et/ou en mode cycle et d'au moins un système de traitement d'image (30) pour la saisie au niveau des coordonnées dans l'espace des alésages filetés (21) et donc pour le montage de roue entièrement automatisé et précis en position, le système de traitement d'image (30) étant conçu de telle sorte qu'une détermination dans l'espace de la position du véhicule (12) et/ou du disque de frein (11) avec des alésages filetés (21) pour les vis de roue et/ou de la roue (100) à monter est effectuée.

2. Dispositif selon la revendication 1, **caractérisé en ce que** la tête de montage (13) est fixée de façon rotative et/ou basculante sur un bras de montage, en particulier sur un bras de robot de montage (16), et ce pour la superposition précise en position d'alésages de jante (20) et d'alésages filetés (21) sur le disque de frein (11).

3. Dispositif selon la revendication 2, **caractérisé en ce que** des tournevis (22) sont disposés sur la tête de montage (13) pour la fixation de vis de jante (23), en particulier **en ce que** le tournevis (22) est conçu de telle sorte que des vis (23) sont amenées au moyen d'un répartiteur multi-cases, de préférence au moyen d'un répartiteur à quatre cases ou d'un répartiteur à cinq cases, à partir d'un dispositif de séparation et les vis (23) sont soufflées par des flexibles.

4. Dispositif selon la revendication 3, **caractérisé en ce que** la tête de montage (13) est dotée d'un manchon repousseur, lequel est conçu de telle sorte que le manchon repousseur entraîne, lors du vissage au moyen des tournevis (22), en même temps un repoussement de la jante (18) par rapport à la pince (14).

5. Dispositif selon au moins l'une quelconque des revendications 1 à 4, **caractérisé en ce que** la pince (14) présente une conception de telle sorte qu'on a un centrage à l'aide d'une zone intérieure du disque de frein (11).

6. Dispositif selon au moins l'une quelconque des revendications 1 à 5, **caractérisé en ce que** le système de caméra (29), de préférence en trois dimensions, présente au moins une caméra, en particulier deux ou trois caméras (25, 26, 28).

7. Dispositif selon au moins l'une quelconque des revendications 1 à 6, **caractérisé en ce que** le système de traitement d'image (30) est en trois dimensions.

8. Dispositif selon au moins l'une quelconque des revendications 1 à 7, **caractérisé en ce que** trois, quatre à cinq alésages filetés (21) sont prévus.

9. Station de montage (50) comprenant au moins un dispositif (10) selon au moins l'une quelconque des revendications 1 à 8, **caractérisée par** au moins une bande d'alimentation (35, 36) pour les roues, qui se termine sur un récepteur de roue sensiblement horizontal, ce récepteur de roue étant doté d'un centrage et étant disposé à proximité du dispositif (10), et le centrage est doté de préférence d'une butée dans la conception d'un prisme, la station (50) présentant de préférence deux systèmes ou robots (38, 39) mécaniques, se faisant face et positionnés à chaque fois sur le côté du véhicule, pour le montage de respectivement une roue arrière et d'une roue avant.

10. Station de montage selon la revendication 9, **caractérisée par** un agencement dans une chaîne de fabrication de véhicules automobiles (12), en particulier de voitures de tourisme.

11. Procédé pour le montage de roue automatique sur un disque de frein (11) d'un véhicule (12) au moyen d'une tête de montage (13), laquelle est dotée d'une pince (14) conçue comme élément écarteur traversant un alésage central d'une jante de roue, **caractérisé par** un dispositif (10) selon au moins l'une quelconque des revendications 1 à 8 ou par une station de montage (50) selon la revendication 9 ou 10.

12. Procédé selon la revendication 11, **caractérisé par**
- un processus d'alimentation des roues (103, 104, 105), lors duquel des roues sont séparées avant que le véhicule (12) ait atteint une position de montage avec un essieu avant et/ou avec un essieu arrière,
- de préférence également un processus de détermination de la hauteur de la position de préhension pour le système mécanique ou pour le robot (15, 38, 39),
- un processus de préhension au cours duquel une pince (14) s'engage dans la roue (100) à l'intérieur,
- un processus d'attente pour la détermination de la position des alésages filetés (21) et/ou de la position de disque de frein,
- un processus de basculement d'un bras de robot (16),
- un processus de positionnement de la roue (100) et/ou
- un processus de fixation, au cours duquel la roue (100) est vissée de façon entièrement automatique.

13. Procédé selon la revendication 11 ou 12, **caractérisé en ce que** la tête de montage (13) est fixée sur un système mécanique ou un robot (38, 39) et est couplée avec un système capteur de télévision ou un système capteur de caméra pour la détection d'une image de trou de jante, pour que la jante de roue (18) et le support de roue soient superposés de façon correcte en position, en particulier avec un dispositif (10) selon au moins l'une quelconque des revendications 1 à 8 ou en particulier avec une station de montage (50) selon la revendication 9 ou 10.

14. Procédé selon la revendication 13, **caractérisé en ce qu'**un système de traitement d'image en trois dimensions (30), auquel sont raccordées plusieurs caméras (25, 26, 28), est utilisé pour d'une part détecter une détermination dans l'espace de la position du véhicule (12), du support de roue avec son image de trou et de la roue à monter et d'autre part d'obtenir une correction d'une position du système mécanique ou du robot, en particulier du robot industriel (15, 38, 39), pour qu'une position différente puisse être compensée par un carrossage, par un braquage par un positionnement de véhicule, par une position du support de roue et/ou par une orientation rotative du support de roue.

15. Utilisation d'au moins un dispositif (10) selon au moins l'une quelconque des revendications 1 à 8 et/ou d'au moins une station de montage (50) selon la revendication 9 ou 10 ou d'un procédé selon au moins l'une quelconque des revendications 11 à 14 pour le montage automatisé d'au moins une roue sur au moins un moyen d'avancement (12) déplacé en particulier de façon continue,
- en mode continu, par exemple pendant le déplacement du moyen d'avancement (12) au moyen d'au moins une manutention et/ou d'un dispositif de transport (37), ou
- en mode cycle, par exemple pendant le repos ou l'immobilisation par exemple provisoire d'au moins une manutention et/ou d'un dispositif de transport (37) conçu pour le déplacement du moyen d'avancement (12).
